# EUROPÄISCHE PATENTSCHRIFT

(11) **EP 2 769 115 B1**
(45) Veröffentlichungstag und Bekanntmachung des Hinweises auf die Patenterteilung: **29.04.2015**
(21) Anmeldenummer: 12769911.4
(22) Anmeldetag: 17.09.2012
(51) Int. Cl.: F16F 1/06, F16F 1/12

(54) **BIEGEDREHFEDER**
FLEXURAL TORSION SPRING
RESSORT DE FLEXION À TORSION

(30) Priorität: 17.10.2011 DE 102011116038
(43) Veröffentlichungstag der Anmeldung: 27.08.2014
(73) Patentinhaber: TrelleborgVibracoustic GmbH, 64293 Darmstadt (DE)
(72) Erfinder: ECKEL, Hans-Gerd, 69514 Laudenbach (DE); RÖHRIG, Bernhard, 64646 Heppenheim (DE)
(74) Vertreter: Flügel Preissner Kastel Schober
(86) Internationale Anmeldenummer: PCT/EP2012/003883
(87) Internationale Veröffentlichungsnummer: WO 2013/056772

(56) Entgegenhaltungen:
- DE-A1-102005 044 214
- DE-A1-102008 017 626

## Beschreibung

### Technisches Gebiet

Die Erfindung betrifft eine Biegedrehfeder zur Übertragung von Drehmomenten, umfassend einen schraubenförmig gewickelten Federkörper, der stirnseitig einerseits eine Drehmomenteinteitungseinrichtung und stirnseitig andererseits eine Drehmomentausleitungseinrichtung aufweist.

### Stand der Technik

Eine solche Biegedrehfeder ist aus der DE 102008017626 A1 bekannt. Die Biegedrehfeder ist dabei in axialer Richtung zwischen einer Antriebscheibe und einer Abtriebscheibe angeordnet und in radialer Richtung aufweitbar und kontrahierbar. Die Biegedrehfeder ist zur Drehdämpfung vorgesehen und gelangt beispielsweise im Antriebstrang eines Kraftfahrzeugs zur Isolation von Drehungleichförmigkeiten einer Verbrennungskraftmaschine zur Anwendung. Stirnseitig beiderseits ist der schraubenförmig gewickelte Federkörper mit separat erzeugten Koppelringen verbunden, wobei die Koppelringe angeformte Nocken haben, um die eingeleiteten Drehmomente übertragen zu können. Die Koppelringe sind mit den Stirnseiten des Federkörpers und die Nocken mit den Koppelringen verschweißt. Die Nocken sind auf den Stirnseiten der Koppelringe angeordnet, die dem Federkörper axial abgewaridt sind.

Die vorbekannte Biegedrehfeder hat somit Koppelringe komplexer Gestalt. Die Herstellung ist deshalb in fertigungstechnischer und wirtschaftlicher Hinsicht wenig zufriedenstellend.

### Darstellung der Erfindung

Der Erfindung liegt die Aufgabe zugrunde, eine Biegedrehfeder der vorbekannten Art derart weiterzuentwickeln, dass sie einfacher sowie kostengünstiger und damit großstückzahlfähig herstellbar ist.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass die Drehmomenteinleitungseinrichtung und die Drehmomentausleitungseinrichtung jeweils durch ein Nockenpaar gebildet sind, mit zwei Nocken, die einander, in Umfangsrichtung des Federkörpers betrachtet, gegenüberliegend angeordnet sind, dass die Nocken der Nockenpaare mit der jeweils stirnseitig letzten Federwindung des Federkörpers und die ersten Nocken der Nockenpaare mit dem jeweiligen Ende der jeweils stirnseitig letzten Federwindung des Federkörpers verbunden sind.
Im Vergleich zur eingangs genannten Biegedrehfeder aus dem Stand der Technik bedarf es bei der erfindungsgemäßen Biegedrehfeder keiner separat erzeugten und mit Federkörper und Nocken zu verbindenden Koppelringe. Die Koppelringe der erfindungsgemäßen Biegedrehfeder sind durch die stirnseitig letzten Federwindungen selbst gebildet. Die Nocken sind auf den letzten Federwindungen des Federkörpers angeordnet. Durch den einfachen und teilearmen Aufbau ist die Biegedrehfeder einfach und kostengünstig herstellbar, auch in großen Stückzahlen.

Außerdem weist die Biegedrehfeder kompakte Abmessungen auf. Beim Aufweiten und Kontrahieren wird der Federkörper durch die Nockenpaaren, die in entsprechenden Führungsmitteln einer An- und einer Abtriebscheibe in Umfangsrichtung und radialer Richtung geführt sind, in seiner konzentrischen Position um die Drehachse gehalten.

Die erfindungsgemäße Biegedrehfeder weist außerdem eine hohe Leistungsdichte auf. Das bedeutet, dass bauraumbezogen bei vorgegebener Federrate ein hohes Drehmoment übertragen werden kann. Anders ausgedrückt: Bei einem vorgegebenen hohen Drehmoment wird dann von einer hohen Leistungsdichte gesprochen, wenn eine niedrige Federrate vorliegt.

Wenn sich der Federkörper infolge Einleitung von Drehmoment im Durchmesser aufweitet, bewegen sich die Nockenpaare mit dem Federende in radialer Richtung. Zieht sich der Federkörper infolge Einleitung von gegensinnigem Drehmoment im Durchmesser zusammen, bewegen sich die Nockenpaare ebenfalls mit dem Federende in radialer Richtung. Hierbei wird das Drehmoment als Kräftepaar an den Nockenpaaren ein- und ausgeleitet und an den radialen Flächen der Nockenpaare die Feder derart geführt, dass die Feder konzentrisch um die Drehachse gehalten wird.

Die Nocken und die stirnseitig letzten Federwindungen können bevorzugt stoffschlüssig verbunden, weiter bevorzugt miteinander verschweißt sein. Die Nocken werden in jedem Fall insofern direkt mit den stirnseitig letzten Federwindungen verbunden, als kein separater Koppelring, wie beispielsweise im Stand der Technik, zur Anwendung gelangt. Eine Schweißverbindung ist bewährt, einfach und kostengünstig herstellbar, robust und gewährleistet eine zuverlässige Verbindung der Nocken mit den letzten Federwindungen während einer langen Gebrauchsdauer.

Die Federwindungen des Federkörpers bestehen bevorzugt aus einem Flachstahl und weisen einen im Wesentlichen rechteckigen Querschnitt mit einem Verhältnis V aus radialer Höhe H und axialer Breite B auf, das 4 bis 6 beträgt.
Bei einer derartigen Dimensionierung des Federkörpers ist von Vorteil, dass es während der bestimmungsgemäßen Verwendung der Biegedrehfeder in axialer Richtung zu keinen unerwünschte Verformungen kommt. Diese unerwünschten Verformungen können beispielsweise durch ein konisches Aufstellen der Federwindungen gebildet sein, das als "Tellern" bezeichnet wird. Bei abweichender Dimensionierung des Federkörpers entstehen bei Kontraktion in den Federwindungen radial außen tangentiale Zugspannungen und radial innen tangentiale Druckspannungen, die Ursache für das Tellern der Federwindungen des Federkörpers aus ihrer ebenen Lage sind. Durch die zuvor beschriebene vorteilhafte Ausgestaltung wird erreicht, dass die Federwindungen weder bei ihrer Aufweitung noch bei ihrer Kontraktion aus ihrer ebenen Lage heraus verformt werden; damit wird eine hohe Isolierfähigkeit von Drehschwingungen erreicht.
Ist das Verhältnis V > 6, entsteht das zuvor beschriebene Tellern, das heißt, der Außenumfang der Federwindungen stellt sich, bezogen auf den Innenumfang der Windungen, in axialer Richtung auf, so dass die Federwindungen entsprechend verkippt im Einbauraum angeordnet sind; die Federwindungen weisen praktisch die Form einer Tellerfeder auf.
Ist das Verhältnis V demgegenüber < 4, entsteht ein unerwünschtes Umfangswellen, das heißt, die Federwindungen verformen sich, in Umfangsrichtung betrachtet, wellenförmig. Sowohl das Tellern als auch das Umfangswellen sind im Bereich der Drehmomente, die übertragen werden sollen, unerwünscht, weil sich durch die axiale Verformung der Federwindungen unerwünscht hohe axiale Spreizkräfte im Einbauraum der Drehfeder ergeben. Diese hohen axialen Spreizkräfte führen zu unerwünscht hohen Reibkräften bzw. Reibmomenten in der Drehfeder selbst (innere Reibung) und in dem umgebenden Gehäuse (äußere Reihung).

Die Nocken können, jeweils in Umfangsrichtung des Federkörper betrachtet, zwei einander gegenüberliegende radiale Führungsflächen aufweisen, die in entsprechenden Führungsmitteln einer An- und eine Abtriebscheibe in Umfangsrichtung und in radialer Richtung geführt hin und her bewegbar sind. Die Führungsflächen stehen mit den entsprechenden Führungsmitteln der An- und der Abtriebscheibe radial und in Umfangsrichtung in Kontakt.
Die Nocken bestehen bevorzugt, ebenso wie der Federkörper, aus einem metallischen Werkstoff. Die Nocken lasse sich dadurch besonderes gut mit dem Federkörper verschweißen. Durch die sich in radialer Richtung erstreckenden Führungsflächen der Nocken wird die Biegedrehfeder während ihrer bestimmungsgemäßen Verwendung stets in einer konzentrischen Position um ihre Drehachse gehalten. Bei radialer Aufweitung und Kontraktion ist dadurch eine lineare Bewegung der Enden des Federkörpers in radialer Richtung geweben. Die Führungsflächen, die die Nocken und damit die Biegdrehfeder radial führen sind so gestaltet, dass diese lineare Bewegung proportional zum Relativverdrehwinkel von Antriebs- und Abtriebsscheibe ist.

Die Führungsflächen können durch die Führungsmittel derart geführt sein, dass verdrehwinkelunabhängig die Symmetrieachse der Biegedrehfeder mit der Drehachse zusammenfällt.
Die beiden stirnseitigen Enden des Federkörpers sind als aktive Federenden ausgebildet. Bei kleinem Raumbedarf weist die Biegedrehfeder eine hohe Leistungsdichte auf.

Der Übergang vom geschlossenen Ring zum Halbring an den Biegedrehfederenden macht diesen zum aktiven Teil der Biegedrehfeder und ermöglicht noch kleineren Bauraumbedarf und damit eine noch höhere Leistungsdichte. Der gesamte Umfang aller Federwindungen wird zur Übertragung des Drehmoments genutzt. Auch die Halbringe sind Teil der Biegedrehfeder und definiert die Drehfederrate mit.
Die Halbringe wie auch die letzten Federwindungen mit können am Umfang sowohl in der Dicke, als auch in der radialen Erstreckung durch beanspruchungsgerechte Gestalt zu kleinerem Gewicht und kleinerer Drehfederrate beitragen. Hier steht der höhere Fertigungsaufwand den Gewichts- und Funktionsvorteilen gegenüber.

Nach einer anderen Ausgestaltung kann es vorgesehen sein, dass die letzte und die vorletzte Federwindung jeder Stirnseite des Federkörpers stoffschlüssig miteinander verbunden sind, bevorzugt nur im Bereich der ersten Nocken.
Die Verbindung der letzten und der vorletzten Federwindung kann dabei so gestaltet sein, dass keine nennenswerte lokale Spannungserhöhung auftritt. Dies erklärt sich aus der Positionierung der Verbindungsmittel, die mit ihren Mitten auf dem mittleren Radius oder besser auf dem Radius der neutralen Faser der Biegedrehfeder angeordnet sind. In diesem nahezu nicht beanspruchten Bereich stören die Verbindungen zwischen letzter und vorletzter Federwindung praktisch nicht.

Die Gestaltung kann dabei folgendermaßen ausgeführt sein:
Durch den paarweisen Einsatz von Verbindungsmitteln sind Biegemomente von letzter zu vorletzter Biedrehfederwindung als Kräftepaar übertragbar.
Die Verbindungsmittel können entlang ihrer axialen Ersteckung ganz oder teilweise eingeschweißt werden. Dies ist bei einem gegebenen Lastfall an der Schweißnahtbeanspruchung festzumachen.

### Kurzbeschreibung der Zeichnung

Die Ausführungsbeispiele werden nachfolgend anhand der Figuren 1 bis 8 näher erläutert.
Diese zeigen jeweils in schematischer Darstellung:
- Fig. 1: ein erstes Ausführungsbeispiel einer erfindungsgemäßen Biegedrehfeder,
- Fig. 2: die Biegedrehfeder aus Fig 1 mit der Darstellung der Verbindung der Nocken mit der Biegedrehfeder;
- Fig. 3: die Biegedrehfeder aus Fig 1 mit der Darstellung der Verbindung der letzten mit der vorletzten Biegedrehfederwindung;
- Fig. 4: ein zweites Ausführungsbeispiel einer Biegdrehfeder ohne Verbindung der letzten mit der vorletzten Biegedrehfederwindung;
- Fig. 5 bis 8: Varianten der Verbindung der Nocken mit der Biegedrehfeder und der Verbindung der letzten mit der vorletzten Biegedrehfederwindung.

### Ausführung der Erfindung

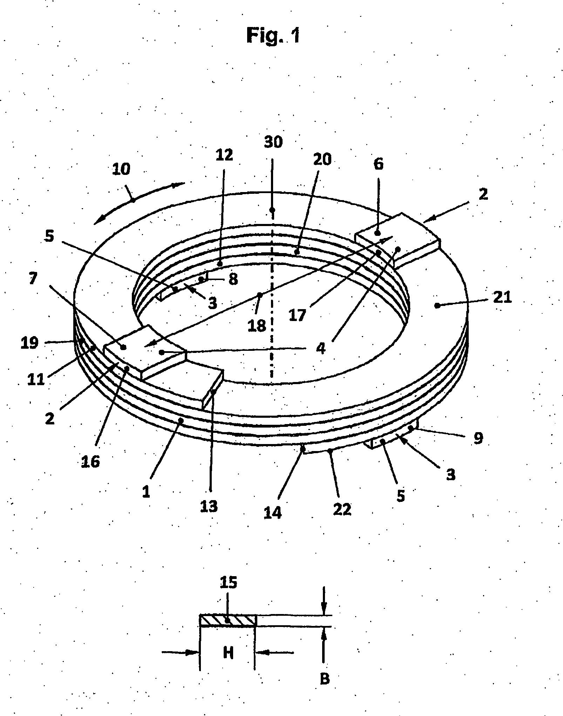

In Fig. 1 ist ein erstes Ausführungsbeispiel der erfindungsgemäßen Biegedrehfeder gezeigt. Die Biegedrehfeder gelangt zur Übertragung von Drehmomenten zur Anwendung, wobei das Drehmoment mittels der Drehmomenteinleitungseinrichtung 2 auf den schraubenförmig gewickelten Federkörper 1 und vom schraubenförmig gewickelten Federkörper 1 auf die Drehmomentausleitungseinrichtung 3 übertragen wird. Die Drehmomenteinleitungseinrichtung 2 und auch die Drehmomentausleitungseinrichtung 3 werden durch die jeweiligen Enden 13, 14 der jeweils stirnseitig letzten Federwindungen 11, 12 des Federkörpers 1 gebildet, wobei diese Enden 13, 14 der letzten Federwindungen 11, 12 mit Nockenpaaren 4, 5 verschweißt sind. Die Nockenpaare 4, 5 umfassen die Nocken 6, 7 und 8, 9. Die Nocken 6, 7 und 8, 9 sind einander, in Umfangsrichtung 10 des Federkörpers 1 betrachtet, gegenüberliegend angeordnet.
Um zu erreichen, dass der Federkörper 1 auch bei seiner Aufweitung oder Kontraktion in einer konzentrischen Position zu seiner Drehachse 30 gehalten wird, haben alle Nocken 6, 7 und 8, 9 jeweils radiale Führungsflächen 16, 17, mit denen sie in Führungsmitteln von einer hier nicht dargestellten An- und einer Abtriebscheibe in radialer Richtung 18 hin und her bewegbar geführt sind. Der Federkörper 1 der Biegedrehfeder ist bei allen Ausführungsbeispielen im Wesentlichen gleich gestaltet, wobei die Federwindungen des Federkörpers 1 aus einem Flachstahl bestehen, mit im Wesentlichen rechteckigem Querschnitt 15, wobei das Verhältnis V aus radialer Höhe H und axialer Breite B etwa 4 bis 6 beträgt; der Federkörper 1 ist also hochkant gewickelt.

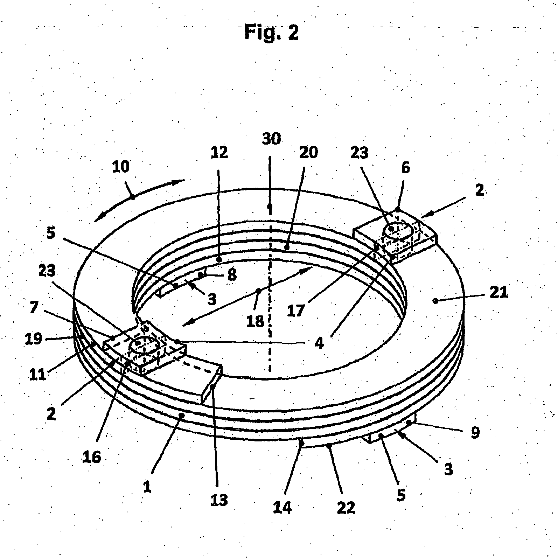

In Fig. 2 ist die Verschweißung des Nockens 7 des Nockenpaares 4 am Ende 13 der stirnseitig letzten Federwindung 11 des Federkörpers 1 gezeigt. Entsprechend sind die anderen Nocken 6, 8, 9 mit den letzten Federwindungen 11, 12 verbunden.

Die Verbindung von Nocken 6 und 7 mit der letzten Federwindung 11 und die Verbindung von Nocken 8 und 9 mit der letzten Federwindung 12 werden hierbei durch die Bolzen 23 gebildet. Diese Bozen 23 sind mit den Nocken 6, 7, 8, 9 und mit den letzten Federwindungen 11, 12 durch Schweißung stoffschlüssig verbunden.

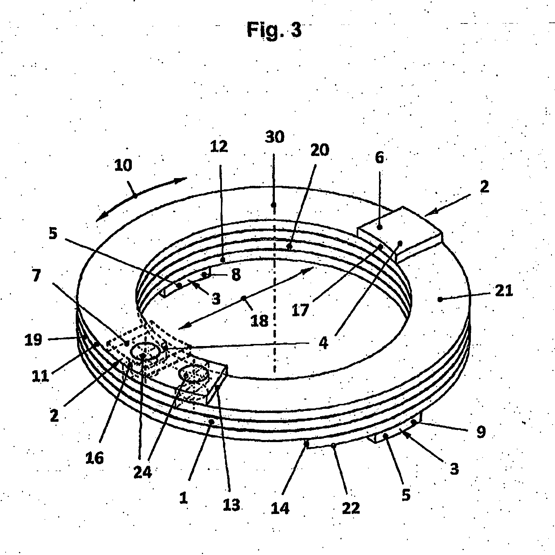

In Fig. 3 ist die Verschweißung der letzten Federwindung 11 mit der vorletzten Federwicklung 19 gezeigt. Entsprechend ist auch letzte Federwindung 12 mit der vorletzten Federwindung 20 verbunden.
Die Verbindung der letzten Federwindung 11 mit der vorletzten Federwindung 19 und die Verbindung von letzten Federwindurig 12 mit der vorletzten Federwicklung 20 werden hierbei durch zwei Verbindungsmittel 24 gebildet. Diese Verbindungsmittel 24 sind mit der vorletzten Federwindung 19/20 und/oder mit der letzten Federwindung 11/12 durch Schweißung stoffschlüssig verbunden. Die Verbindungsmittel 24 sind in Umfansrichtung beabstandet und mit ihren Mitten auf dem mittleren Radius oder besser auf dem Radius der neutralen Faser der Biegedrehfeder angeordnet.

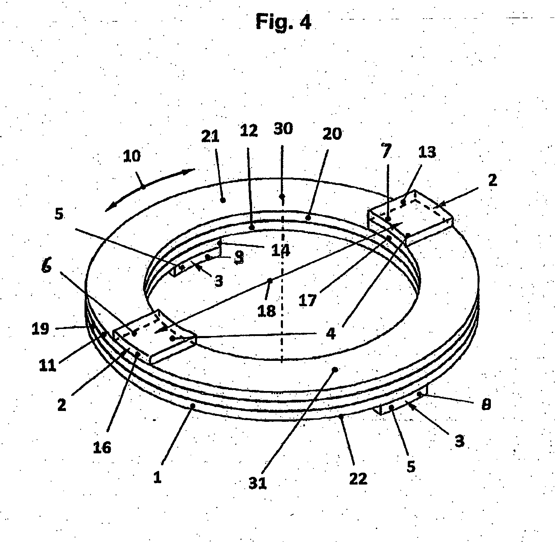

In Fig. 4 sind die Enden 13, 14 der jeweils stirnseitig letzten Federwindungen 11, 12 des Federkörpers 1 als aktiver Teil der Biegedrehfeder ausgebildet. Der Übergang vom geschlossenen Ring zum Halbring 31, der jeweils die aktiven Enden 13, 14 der stirnseitig letzten Federwindungen 11, 12 bildet, und mit den Nocken 6, 7 und 8, 9 des Nockenpaares 4, 5 verbunden ist, ermöglicht einen noch kleineren Bauraumbedarf und damit eine noch höhere Leistungsdichte. Dies gilt für beide Stirnseiten 21, 22 des Biegedrehfederkörpers 1. Der gesamte Umfang aller Federwindungen wird zur Übertragung des Drehmoments genutzt. Auch der Halbring 31 ist Teil der Biegedrehfeder und definiert die Drehfederrate mit.

Der Halbring 31 wie auch die letzten Federwindungen 11, 12 mit können am Umfang sowohl in der Dicke, als auch in der radialen Erstreckung durch beanspruchungsgerechte Gestalt zu kleinerem Gewicht beitragen.

In Fig_{.} 5 bis 8 sind vorteilhafte Ausgestaltungen der stoffschlüssigen Verbindung zwischen Nocken 6, 7, 8, 9 und letzter Federwindung 11, 12 und der Verbindung von letzter mit vorletzter Federwindung 19, 20 im Schnitt dargestellt. Die Schweißnähte 27, 28 a, b, c erstecken sich konzentrisch um die jeweiligen Mittellinien.
Die Darstellungen gelten für beide Stirnseiten 21, 22 der Biegedrehfeder..

Die Verwendung von Bolzen 23 und Verbindungsmitteln 24 a, b, c, d zur stoffschlüssigen Verbindung von Nocken 6, 7, 8, 9 mit letzter Federwindüng 11, 12 und letzter 11, 12 mit vorletzter Federwindung 19, 20 hat den Vorteil, dass Baustahl als Werkstoff für Bolzen 23 und Verbindunigsmittel 24 a, b, c, d mit dem Federstahl der Biegedrehfeder in dieser Kombination hohe Schweißnahtgüte ergibt.
Das Verschweißten von Federstahl mit Federstahl ergibt in der Regel aufgrund des hohen Kohlenstoffgehalts nur minderwertige Schweißnähte.
Dies ist ein Grund, der das Verbinden/Durchschweißen von letzten 11, 12 mit vorletzten Federwindungen 19, 20 als auch das Punkt- oder Rollschweißen für diese Anwendung verbietet.
Ein weiterer Grund ist die hohe Beanspruchung der Schweißnahtränder 27, 28 a, b, c beim möglichen Aufbiegen/Aufklaffen von letzter 11, 12 und vorletzter Federwindung 19, 20.

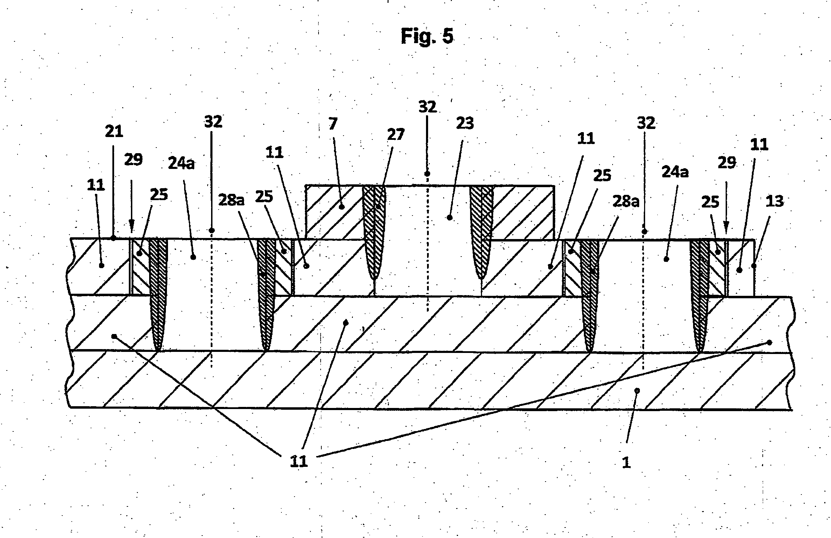

Fig. 5 zeigt die Verbindung von Nocken 7 mit letzter Federwindung 11 mittels der Schweißnaht 27 und die Verbindung von letzter Federwindung 11 mit vorletzter Federwindung 19 mittels der Schweißnaht 28a. Hierbei kommt ein Einschweißring 25 zur Verwendung.

Die Tiefe der Schweißnaht 27 erstreckt sich hierbei nur über einen Teil der Dicke des Nockens 7 und der letzten Federwindung 11. Die Tiefe der Schweißnaht 28 a kann sich teilweise oder über die gesamte Dicke der letzten Federwindung 11 und der vorletzten Federwindung 19 erstrecken.
Diese Anordnung erlaubt infolge des Spiels 29 das Abheben der letzten 11 von der vorletzten Federwindung 19. Dadurch haben die Verbindungsmittel 24 a, b, c und die Schweißnähte nur Kräfte längs der Flächen zwischen den Federwindungen 11, 19 zu übertragen. Durch die paarweise Anordnung der Verbindungsmittel 24 a, b, c sind so Biegemomente übertragbar. Eine hohe Schweißnahtbeanspruchung an den Schweißnahtränder 27, 28 a, b, c wird dadurch vermieden.

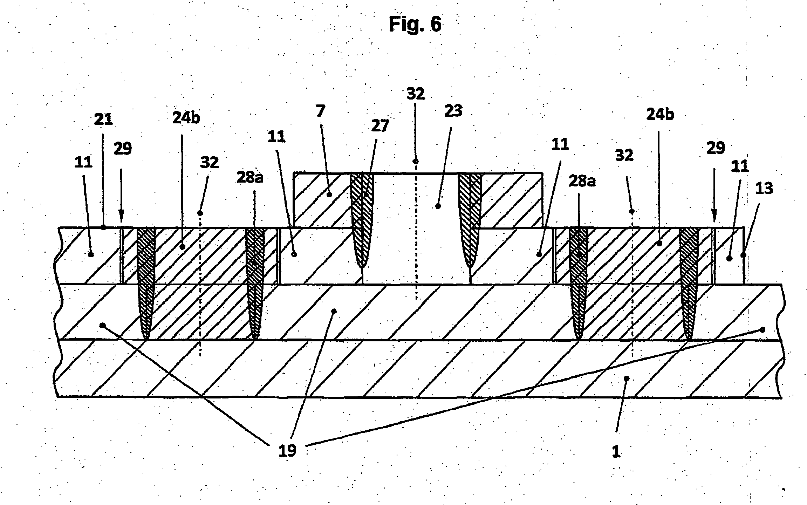

Fig. 6 zeigt die Verbindung von Nocken 7 mit letzter Federwindung 11 mittels der Schweißnaht 27 und die Verbindung von letzter Federwindung 11 mit vorletzter Federwindung 19 mittels der Schweißnaht 28a. Hierbei ist das Verbindungsmittel 24a mit dem Einschweißring 25 zum Verbindungsmittel 24b vereinigt.
Die Tiefe der Schweißnaht 27 erstreckt sich hierbei nur über einen Teil der Dicke des Nockens 7 und der letzten Federwindung 11. Die Tiefe der Schweißnaht 28a kann sich teilweise oder über die gesamte Dicke der letzten Federwindung 11 und der vorletzten Federwindung 19 erstrecken.
Diese Anordnung erlaubt infolge des Spiels 29 ebenfalls das Abheben letzter 11 von der vorletzter Federwindung 19.

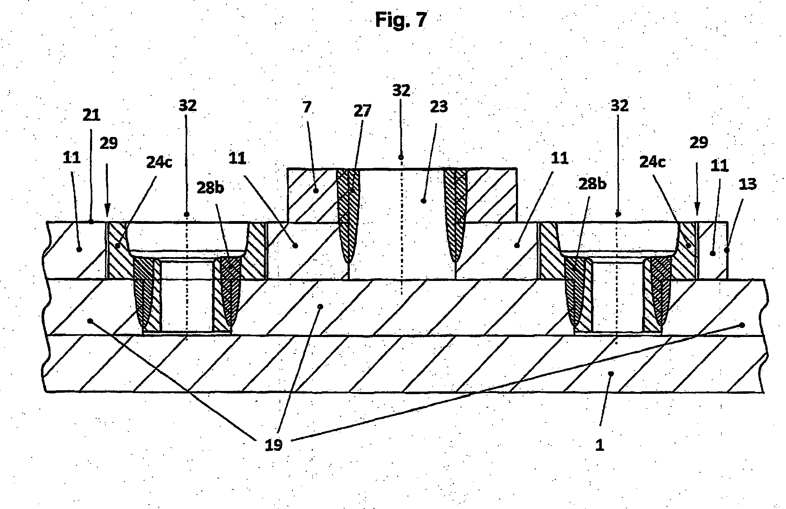

Fig. 7 zeigt die Verbindung von Nocken 7 mit letzter Federwindung 11 mittels der Schweißnaht 27 und die Verbindung von letzter Federwindung 11 mit vorletzter Federwindung 19 mittels der Schweißnaht 28b. Hierbei ist das Verbindungsmittel 24a mit dem Einschweißring 25 zum Verbindungsmittel 24c vereinigt.

Die Tiefe der Schweißnaht 27b erstreckt sich hierbei nur über einen Teil der Dicke des Nockens 7 und der letzten Federwindung 11. Die Tiefe der Schweißnaht 28b erstreckt sich nur teilweise über die Dicke des Verbindungsmittels 24c und der vorletzten Federwindund 19.
Auch diese Anordnung erlaubt infolge des Spiels 29 ebenfalls das Abheben der letzten Federwindung 11 von vorletzter Biegedrefederwindung 19.

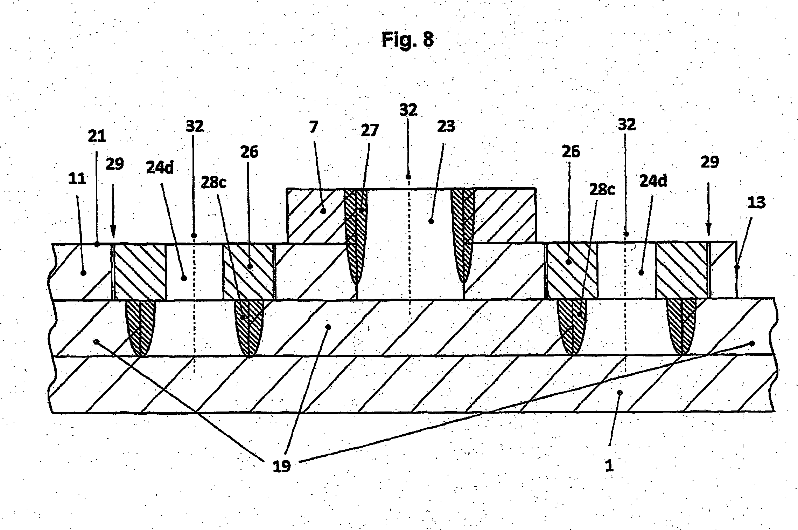

Fig. 8 zeigt die Verbindung von Nocken 7 mit letzter Federwindung 11 mittels der Schweißnaht 27 und die Verbindung von des Verbindungsmittels 24d mit der vorletzter Federwindung 19 mittels der Schweißnaht 28c. Nach Herstellung der Schweißnaht 28c kommt ein Aufpressring 26 zur Darstellung des Spiels 29 zur Verwendung.
Die Tiefe der Schweißnaht 27 erstreckt sich hierbei nur über einen Teil der Dicke des Nockens 7 und der letzten Federwindung 11. Die Tiefe der Schweißnaht 28c kann sich ganz oder teilweise über die Dicke der vorletzten Federwindung 19 erstrecken.

Auch diese Anordnung erlaubt infolge des Spiels 29 ebenfalls das Abheben der letzten Federwindung 11 von der vorletzten Federwindung 19.

## Patentansprüche

1. Biegedrehfeder zur Übertragung von Drehmomenten, umfassend einen schraubenförmig gewickelten Federkörper (1), der stirnseitig einerseits eine Drehmomenteinleitungseinrichtung (2) und stirnseitig andererseits eine Drehmomentausleitungseinrichtung (3) aufweist, **dadurch gekennzeichnet, dass** die Drehmomenteinleitungseinrichtung (2) und die Drehmomentausleitungseinrichtung (3) jeweils durch ein Nockenpaar (4, 5) gebildet sind, mit zwei Nocken (6, 7; 8, 9), die einander, in Umfangsrichtung (10) des Federkörpers (1) betrachtet, gegenüberliegend angeordnet sind, dass die Nocken (6, 7; 8, 9) der Nockenpaare (4, 5) mit der jeweils stirnseitig letzten Federwindung (11, 12) des Federkörpers (1) und die ersten Nocken (7, 9) der Nockenpaare (4, 5) mit dem jeweiligen Ende (13, 14) der jeweils stirnseitig letzten Federwindung (11, 12) des Federkörpers (1) verbunden sind.

2. Biegedrehfeder nach Anspruch 1, **dadurch gekennzeichnet, dass** die Nocken (6, 7; 8, 9) und die stirnseitig letzten Federwindungen (11, 12) stoffschlüssig verbunden sind.

3. Biegedrehfeder nach einem der Ansprüche 1 oder 2, **dadurch gekennzeichnet, dass** die Nocken (6, 7; 8, 9) mit den stirnseitig letzten Federwindungen (11, 12) verschweißt sind.

4. Biegedrehfeder nach einem der Ansprüche 1 bis 3, **dadurch gekennzeichnet, dass** die Federwindungen des Federkörpers (1) aus Stahl bestehen und einen im Wesentlichen rechteckigen Querschnitt (15) aufweisen, mit einem Verhältnis (V) aus radialer Höhe (H) und axialer Breite (B), das 4 bis 6 beträgt.

5. Biegedrehfeder nach einem der Ansprüche 1 bis 4, **dadurch gekennzeichnet, dass** die Nocken (6, 7; 8, 9) jeweils in Umfangsrichtung (10) des Federkörpers (1) betrachtet, zwei einander gegenüberliegende radiale Führungsflächen (16, 17) aufweist, die in entsprechenden Führungsmittel einer An- und einer Abtriebscheibe in Umfangsrichtung und in radialer Richtung (18) geführt hin und her bewegbar sind.

6. Biegedrehfeder nach einem der Ansprüche 1 bis 5, **dadurch gekennzeichnet, dass** die Nocken (6, 7; 8, 9) in radialer Richtung (18) jeweils zwei einander gegenüberliegende Führungsflächen (16, 17) aufweisen, die mit entsprechenden Führungsmitteln einer An- und einer Abtriebscheibe radial hin und her bewegbar sind.

7. Biegedrehfeder nach Anspruch 6 **dadurch gekennzeichnet, dass** die Führungsflächen (16, 17) durch die Führungs Mittelt derart geführt sind, dass verdrehwinkelunabhängig die Symmetrieachse der Biegedrehfeder mit der Drehachse (30) zusammen fällt.

8. Biegedrehfeder nach einem der Ansprüche 1 bis 7, **dadurch gekennzeichnet, dass** die letzte (11, 12) und die vorletzte Federwindung (19, 20) jeder Stirnseite (21, 22) des Federkörpers (1) stoffschlüssig miteinander verbunden sind.

9. Biegedrehfeder nach Anspruch 8, **dadurch gekennzeichnet, dass** die letzte (11, 12) und die vorletzte Federwindung (19, 20) nur im Bereich der ersten Nocken (7, 9) jeweils stoffschlüssig miteinander verbunden sind.

10. Biegedrehfeder nach einem der Ansprüche 8 oder 9, **dadurch gekennzeichnet, dass** die stoffschlüssige Verbindung eine Schweißverbindung ist.

11. Biegedrehfeder nach einem der Ansprüche 1 bis 10, **dadurch gekennzeichnet, dass** der Federkörper (1) aus einem Federstahl mit hohlem Kohlenstoffgehalt und die Nocken (6, 7, 8, 9) aus einem Baustahl mit niedrigem Kohlenstoffgehalt bestehen.

## Claims

1. A flexural torsion spring for transmitting torques, comprising a helically coiled spring body (1) which has a torque input means (2) on one end side and a torque output means (3) on the other end side, **characterised in that** the torque input means (2) and the torque output means (3) are formed in each case by a cam pair (4, 5) having two cams (6, 7; 8, 9) which, viewed in the circumferential direction (10) of the spring body (1), are disposed opposite one another, that the cams (6, 7; 8, 9) of the cam pairs (4, 5) are connected to the respective final end-side spring winding (11, 12) of the spring body (1), and the first cams (7, 9) of the cam pairs (4, 5) are connected to the respective end (13, 14) of the respective final end-side spring winding (11, 12) of the spring body (1).

2. The flexural torsion spring according to claim 1, **characterised in that** the cams (6, 7; 8, 9) and the final end-side spring windings (11, 12) are connected by substance-to-substance connection.

3. The flexural torsion spring according to any one of the claims 1 or 2, **characterised in that** the cams (6, 7; 8, 9) are welded to the final end-side spring windings (11, 12).

4. The flexural torsion spring according to any one of the claims 1 to 3, **characterised in that** the spring windings of the spring body (1) are made of steel and have a substantially rectangular cross section (15) with a ratio (V) between the radial height (H) and the axial width (B) which is between 4 and 6.

5. The flexural torsion spring according to any one of the claims 1 to 4, **characterised in that** the cams (6, 7; 8, 9), in each case viewed in the circumferential direction (10) of the spring body (1), comprise two radial guide surfaces (16, 17) that are opposite one another and, guided in corresponding guide means of a driving and a driven pulley, can be moved back and forth in the circumferential direction and in the radial direction (18).

6. The flexural torsion spring according to any one of the claims 1 to 5, **characterised in that**, in the radial direction (18), the cams (6, 7; 8, 9) respectively comprise two guide surfaces (16, 17) that are opposite one another, which can be moved radially back and forth with corresponding guide means of a driving and a driven pulley.

7. The flexural torsion spring according to claim 6, **characterised in that** the guide surfaces (16, 17) are guided by the guide means in such a way that the axis of symmetry of the flexural torsion spring coincides with the axis of rotation (30) irrespective of the torsion angle.

8. The flexural torsion spring according to any one of the claims 1 to 7, **characterised in that** the final (11, 12) and the penultimate spring winding (19, 20) of each end side (21, 22) of the spring body (1) are connected to one another by substance-to-substance connection.

9. The flexural torsion spring according to claim 8, **characterised in that** the final (11, 12) and the penultimate spring winding (19, 20) are respectively connected to one another by substance-to-substance connection only in the region of the first cams (7, 9).

10. The flexural torsion spring according to any one of the claims 8 or 9, **characterised in that** the substance-to-substance connection is a welded connection.

11. The flexural torsion spring according to any one of the claims 1 to 10, **characterised in that** the spring body (1) is made of a spring steel with a high carbon content and the cams (6, 7, 8, 9) are made of a construction steel with a low carbon content.

## Revendications

1. Ressort de torsion/flexion pour la transmission de couples de rotation, comprenant un corps de ressort (1) enroulé sous forme hélicoïdale qui comprend du côté frontal d'une part un dispositif d'injection de couple de rotation (2) et du côté frontal d'autre part un dispositif de sortie de couple de rotation (3),
**caractérisé en ce que** le dispositif d'injection de couple de rotation (2) et le dispositif de sortie de couple de rotation (3) sont formés chacun par une paire de cames (4, 5) comprenant deux cames (6, 7 ; 8, 9) qui, observées en direction périphérique (10) du corps de ressort (1), sont agencées en opposition mutuelle, **en ce que** les cames (6, 7 ; 8, 9) des paires de came (4, 5) sont reliées à la dernière spire respective (11, 12) du côté frontal du corps de ressort (1), et les premières cames (7, 9) des paires de came (4, 5) sont reliées à l'extrémité respective (13, 14) de la dernière spire respective (11, 12) du côté frontal du corps de ressort (1).

2. Ressort de torsion/flexion selon la revendication 1, **caractérisé en ce que** les cames (6, 7 ; 8, 9) et les dernières spires (11, 12) du ressort du côté frontal sont reliées par coopération de matières.

3. Ressort de torsion/flexion selon l'une des revendications 1 ou 2, **caractérisé en ce que** les cames (6, 7 ; 8, 9) sont reliées par soudure avec les dernières spires (11, 12) du ressort du côté frontal.

4. Ressort de torsion/flexion selon l'une des revendications 1 à 3, **caractérisé en ce que** les spires du corps de ressort (1) sont en acier et présentent une section transversale (15) sensiblement rectangulaire, avec un rapport (V) de la hauteur radiale (H) sur la largeur axiale (B) qui est entre 4 et 6.

5. Ressort de torsion/flexion selon l'une des revendications 1 à 4, **caractérisé en ce que** les cames (7, 6 ; 8, 9) comprennent, observées respectivement en direction périphérique (10) du corps de ressort (1), deux surfaces de guidage radiales (16, 17) mutuellement opposées, qui guidage correspondants d'une plaque menante et d'une plaque menée, en direction périphérique et en direction radiale (18).

6. Ressort de torsion/flexion selon l'une des revendications 1 à 5, **caractérisé en ce que** les cames (6, 7 ; 8, 9) comportent en direction radiale (18) deux surfaces de guidage respectives (16, 17) mutuellement opposées, qui sont déplaçables radialement en va-et-vient avec des moyens de guidage correspondants d'une plaque menante et d'une plaque menée.

7. Ressort de torsion/flexion selon la revendication 6, **caractérisé en ce que** les surfaces de guidage (16, 17) sont guidées par les moyens de guidage de telle façon que l'axe de symétrie du ressort de torsion/flexion coïncide avec l'axe de rotation (30) de manière indépendante de l'angle de torsion.

8. Ressort de torsion/flexion selon l'une des revendications 1 à 7, **caractérisé en ce que** la dernière spire (11, 12) et l'avant dernière spire (19, 20) de chaque face frontale (21, 22) du corps de ressort (1) sont reliées l'une à l'autre par coopération de matières.

9. Ressort de torsion/flexion selon la revendication 8, **caractérisé en ce que** la dernière spire (11, 12) et l'avant dernière spire (19, 20) sont reliées respectivement l'une à l'autre par coopération de matières uniquement dans la zone des premières cames (7, 9).

10. Ressort de torsion/flexion selon l'une des revendications 8 ou 9, **caractérisé en ce que** la liaison à coopération de matières est une liaison soudée.

11. Ressort de torsion/flexion selon l'une des revendications 1 à 10, **caractérisé en ce que** le corps de ressort (1) est en acier-ressort avec une forte teneur en carbone, et les cames (6, 7, 8, 9) sont en acier de construction avec une faible teneur en carbone.
